# EUROPÄISCHE PATENTSCHRIFT

(11) **EP 2 150 427 B1**
(45) Veröffentlichungstag und Bekanntmachung des Hinweises auf die Patenterteilung: **14.06.2017**
(21) Anmeldenummer: 08748726.0
(22) Anmeldetag: 01.04.2008
(51) Int. Cl.: B60J 7/057, B60R 16/03

(54) **VORRICHTUNG ZUM BETRIEB EINES ELEKTRISCHEN VERBRAUCHERS EINES KRAFTFAHRZEUGS**
DEVICE FOR OPERATING AN ELECTRICAL USER ON A MOTOR VEHICLE
DISPOSITIF PERMETTANT DE FAIRE FONCTIONNER UNE CHARGE ÉLECTRIQUE DANS UN VÉHICULE À MOTEUR

(30) Priorität: 05.04.2007 DE 202007005077 U
(43) Veröffentlichungstag der Anmeldung: 10.02.2010
(73) Patentinhaber: Huf Hülsbeck & Fürst GmbH & Co. KG, 42551 Velbert (DE)
(72) Erfinder: BROZIO, Dieter, 45138 Essen (DE); SIEG, Berthold, 46240 Bottrop (DE)
(74) Vertreter: Eggers, Thomas Peter
(86) Internationale Anmeldenummer: PCT/DE2008/000552
(87) Internationale Veröffentlichungsnummer: WO 2008/122272

(56) Entgegenhaltungen:
- US-A- 5 869 942

## Beschreibung

Die vorliegende Erfindung betrifft eine Vorrichtung zum Betrieb eines elektrischen Verbrauchers, insbesondere eines Elektromotors, eines Kraftfahrzeugs. Mit der Vorrichtung können z.B. Klappen, Schiebetüren und Türen elektromotorisch bewegt werden.

Aus der gattungsbildenden US5869942A ist ein Kraftfahrzeug bekannt, welches einen elektrischen Motor und eine Kontrolleinheit umfasst, wobei die Kontrolleinheit mit einem Massepotenzial verbindbar ist.

Die Entwicklung elektronischer Baugruppen zeigt, dass Informationen mit immer geringeren Energiepegeln verarbeitet werden, dass ihre Funktionalität ständig zunimmt und dass sich dabei ihre Größe stetig verringert. Diese Entwicklung führt aber auch dazu, dass die Funktion von elektronischen Baugruppen durch elektromagnetische Störstrahlungen leichter gestört werden kann. Um eine ausreichende Zuverlässigkeit und die Funktion solcher Baugruppen zu gewährleisten, spielt die elektromagnetische Verträglichkeit (EMV) eine wesentliche Rolle. Eine verbesserte elektromagnetische Verträglichkeit von Bauelementen kann z.B. erreicht werden, indem die Leistung von Störausstrahlungen verringert wird und/oder die Abschirmung von empfindlichen elektronischen Baugruppen gegen elektromagnetische Störungen verbessert wird.

Ist eine elektronische Baugruppe über elektrische Leitungen mit einem elektrischen Verbraucher verbunden, so können elektromagnetische Störungen, die von der elektronischen Baugruppe ausgehen, über die Leitungen zu dem elektrischen Verbraucher gelangen. Der elektrische Verbraucher und die elektrischen Leitungen können dann als Antenne wirken und die elektromagnetische Störung in die Umgebung abstrahlen. Ist der elektrische Verbraucher weiterhin zum Beispiel mit einer Tür oder einer Klappe eines Kraftfahrzeugs verbunden, so ist es auch möglich, dass diese Teile des Kraftfahrzeugs die Abstrahlung der elektromagnetischen Störung begünstigen.

Ein elektronisches Bauteil alleine wird bei Verwendung einer geeigneten Abschirmung nur sehr geringe Störstrahlungen aussenden. Ist ein elektronisches Bauelement jedoch über elektrische Leiter mit einem elektrischen Verbraucher verbunden, verursachen elektromagnetische Störaussendungen des elektronischen Bauteils Störspannungen, insbesondere hochfrequente Gleichtaktstörspannungen, und/oder Störströme, insbesondere hochfrequente Gleichtaktstörströme, in den Zuleitungen des elektrischen Verbrauchers. Der elektrische Verbraucher, die Zuleitungen und die metallischen Elemente mit denen der Verbraucher verbunden ist, können dann als Antenne wirken und die elektromagnetische Störung an die Umgebung abgeben. Die Stärke dieses Effekts hängt auch von der Frequenz der Störspannungen ab.

Hiervon ausgehend ist es Aufgabe der vorliegenden Erfindung eine Vorrichtung anzugeben, welche die mit Bezug auf den Stand der Technik geschilderten Probleme zumindest teilweise löst, wobei insbesondere eine Vorrichtung angegeben werden soll, die eine elektronische Baugruppe über elektrische Leitungen mit einem elektrischen Verbraucher so verbindet, dass keine bzw. sehr geringe Störabstrahlungen auftreten. Zudem soll die Vorrichtung preiswert und flexibel im Fahrzeug positionierbar sein und die Möglichkeit eröffnen, bestehende Systeme nachträglich zu verbessern (Nachrüstung).

Diese Aufgaben werden gelöst mit einer Vorrichtung gemäß den Merkmalen des unabhängigen Anspruchs. Weitere vorteilhafte Ausgestaltungen sind in den jeweils abhängig formulierten Ansprüchen angegeben. Es ist darauf hinzuweisen, dass die in den Patentansprüchen einzeln aufgeführten Merkmale in beliebiger, technologisch sinnvoller, Weise miteinander kombiniert werden können, und weitere Ausgestaltungen der Erfindung aufzeigen. Die Beschreibung, insbesondere im Zusammenhang mit den Figuren, gibt Hinweise auf weitere bevorzugte Ausgestaltungen der Erfindung.

Somit umfasst die erfindungsgemäße Vorrichtung zum Betrieb mindestens eines elektrischen Verbrauchers eines Kraftfahrzeugs zumindest:
- eine elektronische Kontrolleinheit, die mit einem Massepotenzial verbindbar ist,
- wenigstens einen elektrischen Verbraucher,
- mindestens eine elektrische Leitung, die den mindestens einen elektrischen Verbraucher mit der elektronischen Kontrolleinheit verbindet, und
- wenigstens eine Masseverbindung, die den mindestens einen elektrischen Verbraucher über die elektronische Kontrolleinheit mit dem Massepotenzial verbindet.

Als elektrischer Verbraucher kommen zum Beispiel ein elektrischer Antrieb oder ein elektrischer Schalter, ein Radio, eine Lautsprecherbox, eine Antenne oder ein ähnlicher elektrischer Verbraucher eines Kraftfahrzeugs in Betracht, der über elektrische Leitungen mit einer elektronischen Baugruppe, insbesondere einer Steuerung und/oder Regeleinheit, verbunden sind. Die Verbindung des elektrischen Verbrauchers mit einer Masseverbindung über die Kontrolleinheit zum Massepotenzial dient der Vermeidung bzw. der Verringerung von elektromagnetischen Störabstrahlungen. Strahlt die elektronische Baugruppe elektromagnetischen Störungen aus, so können diese einen Störstrom, insbesondere einen hochfrequenten Gleichtaktstörstrom, in den Zuleitungen zu dem elektrischen Verbraucher verursachen. Diese Störströme können dann von dem Verbraucher in Form von elektromagnetischer Störstrahlung abgestrahlt werden. Eine Verbindung des elektrischen Verbrauchers mit dem Massepotenzial, leitet die Störströme zum Massepotenzial ab und kann so die Störabstrahlung verringern.

Als Massepotenzial ist insbesondere ein elektrisches Potential eines Gegenstandes gemeint. Bei einem Kraftfahrzeug kann z.B. die Karosserie ein Gegenstand mit Massepotenzial sein. Die elektrische Anbindung eines Gegenstandes mit Massepotenzial an ein anderes Bauteil, insbesondere eine Kontrolleinheit, oder einen elektrischen Verbraucher, erfolgt über eine Masseverbindung, die das Bauteil elektrisch leitend mit einem Massepotenzial bzw. mit einem Gegenstand der ein Massepotenzial besitzt verbindet.

Die elektrischen Leitungen können z.B. dazu dienen, einen elektrischen Verbraucher mit elektrischer Energie zu versorgen und/oder auch elektrische Signale zu übertragen. Handelt es sich bei dem elektrischen Verbraucher um einen Elektromotor, so kann dem Elektromotor eine Versorgungsspannung über eine elektronische Kontrolleinheit, insbesondere eine elektronische Steuerung, zur Verfügung gestellt werden. Eine Ansteuerung des Elektromotors von der elektrischen Kontrolleinheit kann insbesondere unter Nutzung einer Pulsweitenmodulation (PWM) geschehen.

Zumeist werden die elektrischen Leitungen (bzw. zumindest eine davon) und die Masseverbindung mit unterschiedlichem Querschnitt ausgeführt, wobei die Masseverbindung regelmäßig einen größeren Querschnitt hat - dies ist aber nicht zwingend erforderlich.

Gemäß einer Weiterbildung der Erfindung wird eine Vorrichtung vorgeschlagen, wobei der mindestens eine elektrische Verbraucher mindestens einen Elektromotor umfasst, wobei weiter der mindestens eine Elektromotor bevorzugt ein Gehäuse und mindestens zwei elektrische Anschlüsse hat, bei dem jeweils eine elektrische Leitung mit einem elektrischen Anschluss und die, insbesondere eine, Masseverbindung mit dem Gehäuse verbunden ist.

Die in den elektrischen Leitungen fließenden Störströme können über kapazitive Kopplungen zu dem Gehäuse gelangen und von dort abgestrahlt werden. Die elektromagnetische Störabstrahlung des Gehäuses wird nun so verringert, indem das Gehäuse des Motors, insbesondere die metallischen bzw. elektrisch leitenden Teile des Gehäuses, über die Masseverbindung mit der elektronischen Kontrolleinheit verbunden wird und diese Kontrolleinheit mit dem Massepotenzial verbunden ist.

Die Lage der elektrischen Leitungen relativ zu der Masseverbindung hat eine Auswirkung auf die Größe der auftretenden Störabstrahlung. Lagen der Leitungen zu der Masseverbindung, die geringe Störabstrahlungen aufweisen, werden in den folgenden Weiterbildungen der Erfindung beschrieben.

Gemäß einer Weiterbildung der Vorrichtung liegen die mindestens eine elektrische Leitung und die mindestens eine Masseverbindung, die einen Verbindungsweg bestimmen, zum überwiegenden Teil des Verbindungsweges aneinander an, wobei der überwiegende Anteil bevorzugt wenigstens 70 % oder sogar wenigstens 90 % des Verbindungsweges beträgt.

Der Verbindungsweg meint hier den Weg von dem elektrischen Verbraucher über eine Masseverbindung oder über eine elektrische Leitung hin zu der elektronischen Kontrolleinheit. Das Aneinanderanliegen der Masseverbindung und einer elektrischen Leitung umfasst auch, dass die elektrische Leitung nicht weiter als z.B. 5 cm (oder sogar nur 2 cm sowie gegebenenfalls höchstens 0,8 cm) von der Masseverbindung entfernt liegen (oder mit direktem Kontakt zueinander). Das Aneinanderanliegen der elektrischen Leitungen und der Masseverbindung kann auch dadurch erreicht werden, dass die elektrischen Leitungen an die Masseverbindung geklebt sind, bzw. eine gemeinsame Hülle aufweisen und auf diese Weise ein Kabel bilden, das die elektrischen Leitungen und die Masseverbindung einschließt. Die elektrischen Leitungen und die Masseverbindung sind dabei gegeneinander elektrisch isoliert. Dies weist den Vorteil auf, dass bei der Installation im Kraftfahrzeug nur das eine Kabel verlegt werden muss, und die elektrischen Leitungen sich bereits in geeigneter Position relativ zu der Masseverbindung befinden.

Gemäß einer weiteren Weiterbildung der Erfindung wird eine Vorrichtung vorgeschlagen, bei der die mindestens eine elektrische Leitung mit der mindestens einen Masseverbindung nicht verschlungen ist. Nicht verschlungen bedeutet auch, dass die elektrische Leitung nicht mit der mindestens einen Masseverbindung verdrillt ist bzw. die elektrische Leitung die Masseverbindung, die häufig die dickere Verbindung im Vergleich zu der elektrischen Leitung ist, nicht umschlingt. Ein solches Verschlingen kann sich nachteilig auf die Leistung der auftretenden Störabstrahlung der Vorrichtung auswirken.

Gemäß einer weiteren Weiterbildung der Erfindung wird eine Vorrichtung vorgeschlagen, bei der eine Mehrzahl von elektrischen Leitungen vorgesehen ist, wobei eine Masseverbindung mittig zu der Mehrzahl von elektrischen Leitungen positioniert ist. Eine solche Positionierung zeichnen sich durch eine besonders geringe Störabstrahlleistungen der Vorrichtung aus.

Bei drei elektrischen Leitungen und einer Masseverbindung kann die mittige Lage z.B. bedeuten, dass die Masseverbindung zwischen der ersten und zweiten bzw. zwischen der zweiten und dritten Leitung in einer Ebene angeordnet ist, oder dass die Leitungen entlang eines gedachten Hohlzylinders liegen, der die Masseverbindung umschließt.

Gemäß einer Weiterbildung der Erfindung wird eine Vorrichtung vorgeschlagen, bei der zwei elektrische Leitungen in einer Ebene angeordnet sind und eine einzelne Masseverbindung dazwischen positioniert ist. Mit anderen Worten heißt das auch, dass zwei elektrische Leitungen außen liegen und eine Masseverbindung dazwischen an beiden Leitungen anliegend positioniert ist, gegebenenfalls nach Art eines so genannten Flachbandes. Eine solche Anordnung ermöglicht ein einfaches Verlegen der Leitungen im Fahrzeug bei gleichzeitig minimierten Störabstrahlleistungen der Vorrichtung.

Weiterhin wird erfindungsgemäß vorgeschlagen, die Vorrichtung zum Bewegen einer Klappe an einem Kraftfahrzeug zu verwenden. Die Klappe kann insbesondere eine Tür, eine-Schiebetür, ein Schiebedach, eine Laderaumklappe, ein Fenster, die Motorraumklappe, die Tankdeckelklappe oder ein anderes bewegliches, verschwenkbares und/oder verfahrbares Teil eines Kraftfahrzeugs sein. Besonders vorteilhaft kann die vorliegende Erfindung im Zusammenhang mit Türen bzw. Schiebetüren eingesetzt werden, die eine elektronische Steuerungseinrichtung aufweisen. Solche Steuerungseinrichtungen können beispielsweise in einer Schiebetür angeordnet und mit dieser zusammen beweglich ausgebildet sein.

Insbesondere findet die hier erfindungsgemäß beschriebene Vorrichtung ihren Einsatz in einem Kraftfahrzeug, wobei der wenigstens eine elektrische Verbraucher an einem, insbesondere elektrisch isoliert beschichteten, Karosseriebauteil des Kraftfahrzeugs befestigbar ist. Als Karosseriebauteile werden zum Beispiel Türen, Laderäume, Insassenräume und Ähnliches angesehen. Mit elektrisch isoliert beschichteten Karosseriebauteilen sind insbesondere lackierte Karosseriebauteile gemeint. Ist ein Karosseriebauteil mit dem Gehäuse eines elektrischen Verbrauchers elektrisch verbunden und besitzt diese Karosseriebauteil Massepotenzial, so ist die Störabstrahlung, die insbesondere von den hochfrequenten Gleichtaktstörströmen auf den Zuleitungen des elektrischen Verbrauchers verursacht wird, deutlich vermindert. Ist jedoch die Verbindung zwischen dem Gehäuse und dem Karosseriebauteil nicht leitend, z.B. verursacht durch die Lackierung, oder besitzt das Karosseriebauteil kein Massepotenzial, weil es z.B. nicht elektrisch leitend mit dem Massepotenzial eines anderen Karosseriebauteils verbunden ist, so wird die Störabstrahlung nicht vermindert. Im Gegenteil kann dann das Karosseriebauteil als Antenne wirken und die Störabstrahlung noch verstärken. Dieses Problem wird hier sicher gelöst, so dass sich gerade Vorteile bei der Massenfertigung im Automobilbau ergeben.

Die erfindungsgemäße Vorrichtung wird vorzugsweise in einem Kraftfahrzeug eingesetzt werden, wobei ein elektrischer Verbraucher einen Elektromotor zum Betätigen einer Klappe des Kraftfahrzeugs aufweist.

Die Erfindung sowie das technische Umfeld werden nun anhand der Figuren näher erläutert. Es ist darauf hinzuweisen, dass die in den Figuren veranschaulichten Ausführungsvarianten die Erfindung nicht beschränken. Regelmäßig werden gleiche Bauteile in allen Figuren mit den gleichen Bezugszeichen versehen. Es zeigen schematisch:
- Fig. 1:: eine erfindungsgemäße Vorrichtung, die mit einem Kraftfahrzeug verbunden ist und zur Bedienung einer Klappe dient,
- Fig. 2:: Anschlüsse und Verbindungen zwischen einer elektrischen Kontrolleinheit und einem elektrischen Verbraucher,
- Fig. 3:: gemessener Pegelverlauf bei Langwellen bei einer bekannten Vorrichtung,
- Fig. 4:: gemessener Pegelverlauf bei Langwellen bei einer erfindungsgemäßen Vorrichtung,
- Fig. 5:: gemessener Pegelverlauf bei Mittelwellen bei einer bekannten Vorrichtung, und
- Fig. 6:: gemessener Pegelverlauf bei Mittelwellen bei einer erfindungsgemäßen Vorrichtung.

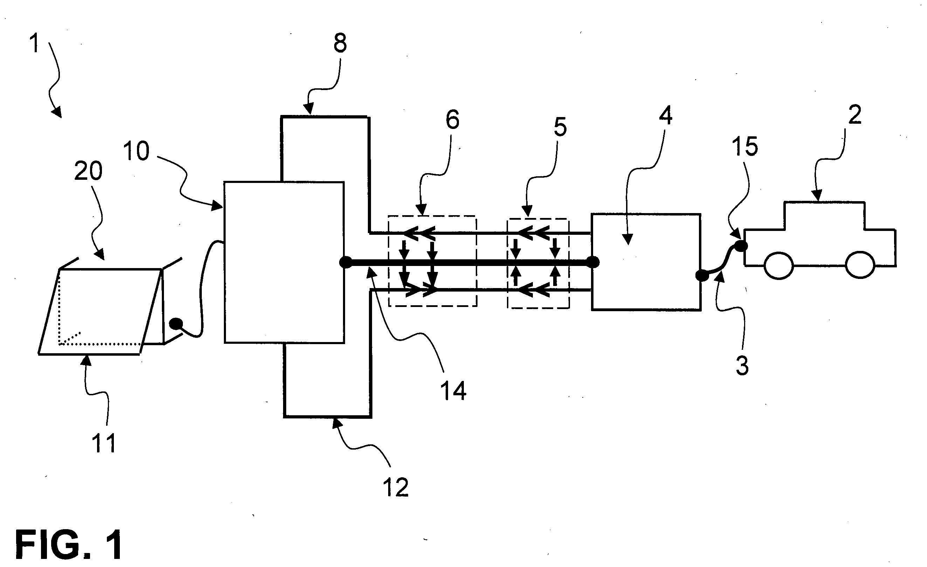

Fig. 1 zeigt eine erfindungsgemäße Vorrichtung 1, die an einem Kraftfahrzeug 2 angeschlossen ist und zum Bewegen einer Klappe 11 dient. Die elektronische Kontrolleinheit 4 ist über eine zweite Masseverbindung 3 mit dem Massepotenzial 15 des Kraftfahrzeugs 2 verbunden. Der elektrische Verbraucher 10 wird über die erste elektrischen Leitungen 8 und die zweite elektrische Leitung 12 von der elektrischen Kontrolleinheit 4 gespeist. Der elektrische Verbraucher 10 ist über eine erste Masseleitung 14 mit der elektrischen Kontrolleinheit 4 verbunden. Der elektrische Verbraucher 10 ist weiterhin an einem Karosseriebauteil 20 befestigt und dient zum Bewegen der Klappe 11. Die von der elektronischen Kontrolleinheit 4 ausgestrahlten Störstrahlungen verursachten bislang in der ersten elektrischen Leitung 8 und der zweiten elektrischen Leitung 12 eine hochfrequente Gleichtaktstörung 5 sowie eine hochfrequente Gegentaktstörung 6. Insbesondere die Gleichtaktstörung wurde dann an die Umgebung abgestrahlt. Mit der hier gezeigten Vorrichtung konnte diese Abstrahlungsleistung deutlich verringert werden.

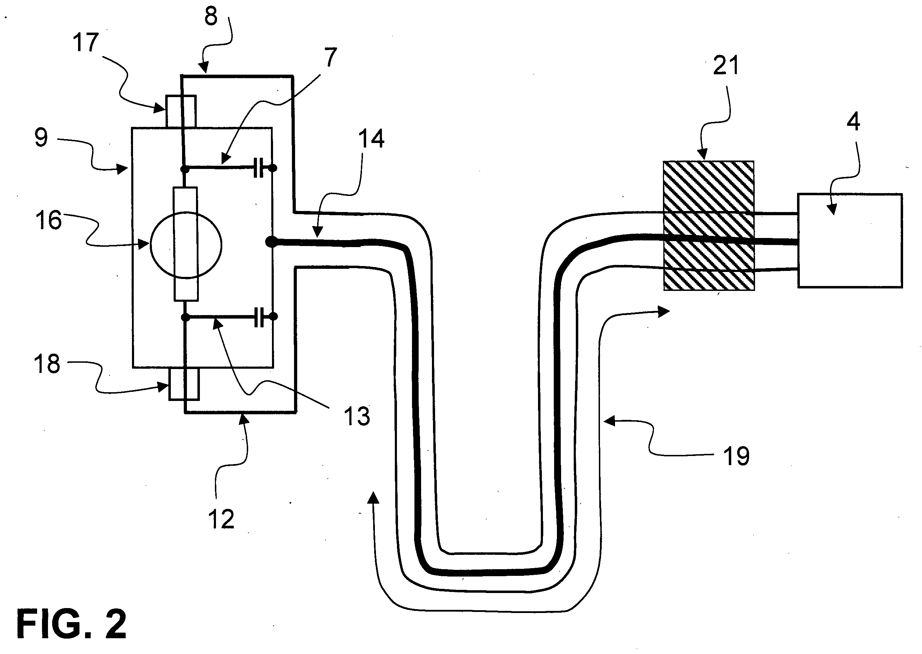

Fig. 2 zeigt schematisch mögliche Verbindungen und Anschlüsse der elektronischen Kontrolleinheit 4 und des hier als Elektromotor 16 ausgebildeten elektrischen Verbrauchers. Die erste elektrische Leitung 8 und die zweite elektrische Leitung 12 sind jeweils über einen ersten elektrischen Anschluss 17 und einen zweiten elektrischen Anschluss 18 mit einem Elektromotor 16 verbunden. Der Elektromotor 16 befindet sich in einem Gehäuse 9. Die erste elektrische Leitung 8 und die zweite elektrische Leitung 12 sind imaginär über die erste kapazitive Kopplung 7 und die zweite kapazitive Kopplung 13 mit dem Gehäuse 9 verbunden. Die Anordnung aus dem Elektromotor 16, der Leitungen 8 und 12 sowie dem Gehäuse 9 weist damit eine parasitäre kapazitive Kopplung auf. Das Gehäuse 9 ist über eine erste Masseverbindung 14 mit der elektrischen Kontrolleinheit 4 verbunden. Die erste Masseverbindung 14 liegt den überwiegenden Teil eines Verbindungsweges 19 mittig und in einer Ebene 21 zwischen der ersten elektrischen Leitung 8 und der zweiten elektrischen Leitung 12.

Die Gleichtaktstörung 5 gelangt von der ersten elektrischen Leitung 8 und der zweiten elektrische Leitung 12 kapazitiv zu dem Gehäuse 9 des Elektromotors 16. Vom Gehäuse 9 werden die Gleichtaktstörungen über eine Masseverbindung 14 zur elektronischen Kontrolleinheit 4 geleitet und von dort mit einem Massepotenzial 15 verbunden. Dies führt zu einer erheblich geringeren Störabstrahlung. Die besondere Lage der ersten Masseverbindung 14, der ersten elektrischen Leitung 8 und der zweiten elektrischen Leitung 12 zueinander bewirkt ebenfalls eine verringerte Störabstrahlung.

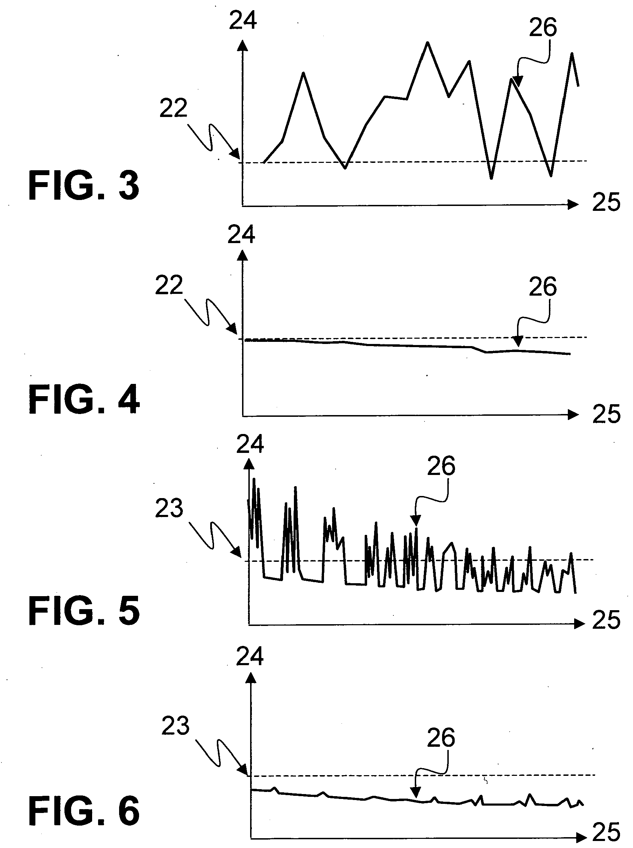

Fig. 3 und Fig. 4 zeigen schematisch den gemessenen Pegelverlauf 26 der Störabstrahlung einer bekannten Vorrichtung (Fig. 3) und einer erfindungsgemäßen Vorrichtung (Fig. 4) im Vergleich. Hierbei wurde ein Elektromotor untersucht, der zum Öffnen bzw. Verschwenken einer Heckklappe oder zum Auf- und Zufahren von Schiebetüren dient. Dabei sind zunächst die Langwellen betrachtet worden, insbesondere in einem Bereich von 150 kHz bis 300 kHz, wobei der dargestellte Frequenzbereich 25 sich beispielsweise gerade über diesen Bereich erstreckt. Gezeigt ist zudem ein erstes Limit 22, welches insbesondere die maximale Verträglichkeit anderen Bauteile des Kraftfahrzeuges veranschaulicht (z.B. 10 dbµV; 10 Dezibel-Mikrovolt). Es ist erkennbar, dass die Spitzen bzw. Maximalwerte des Pegelverlaufes 26 Pegel der Störstrahlung 24 erreichen, die das Doppelte, das Dreifache, das Vierfache oder sogar darüber hinausgehende Vielfache dieses ersten Limits 22 erreichen (vergleiche Fig. 3). In Fig. 4 ist dahingegen der Pegelverlauf 26 gezeigt, der mit einer erfindungsgemäßen Abwandlung erreicht werden konnte, der über den gesamten hier betrachteten Frequenzbereich 25 unterhalb des ersten Limits 22 bleibt.

In entsprechender Weise wurden die Untersuchungen auch mittleren Frequenzbereich durchgeführt, insbesondere im Frequenzbereich 25 von 500 kHz bis 1,7 MHz, Messungen durchgeführt, die in Fig. 5 und Fig. 6 gegenübergestellt sind. Dabei wurde nun ein zweites Limit 23, das insbesondere kleiner als das erste Limit 22 ist - z.B. 6 dBµV betrachtet. Auch aus dem Vergleich dieser beiden Figuren geht die überraschend positive Wirkung der erfindungsgemäßen Vorrichtung hervor, die wiederum beispielhaft für einen Elektromotor einer Schiebetür eines Kraftfahrzeuges getestet wurde. Es ließ sich zudem feststellen, dass die Erfindung besonders wirksam im Frequenzbereich bis ca. 1,7 MHz ist, da hier insbesondere alle signifikanten EMV-Maxima unterdrückt werden.

### Bezugszeichenliste

- 1: Vorrichtung
- 2: Kraftfahrzeug
- 3: zweite Masseverbindung
- 4: elektronische Kontrolleinheit
- 5: Gleichtaktstörung
- 6: Gegentaktstörung
- 7: erste kapazitive Kopplung
- 8: erste elektrische Leitung
- 9: Gehäuse
- 10: Verbraucher
- 11: Klappe
- 12: zweite elektrische Leitung
- 13: zweite kapazitive Kopplung
- 14: erste Masseverbindung
- 15: Massepotenzial
- 16: Elektromotor
- 17: erster elektrischer Anschluss
- 18: zweiter elektrischer Anschluss
- 19: Verbindungsweg
- 20: Karosseriebauteil
- 21: Ebene
- 22: erstes Limit
- 23: zweites Limit
- 24: Pegel der Störstrahlung
- 25: Frequenzbereich
- 26: Pegelverlauf

## Patentansprüche

1. Vorrichtung (1) zum Betrieb mindestens eines elektrischen Verbrauchers (10) eines Kraftfahrzeugs (2) umfassend zumindest
- eine elektronische Kontrolleinheit (4), die mit einem Massepotenzial verbindbar ist,
- wenigstens einen elektrischen Verbraucher (10),
- mindestens eine elektrische Leitung (8, 12), die den mindestens einen Verbraucher (10) mit der elektronischen Kontrolleinheit verbindet,
- mindestens eine Masseverbindung (14), die den mindestens einen elektrischen Verbraucher (10) über die elektronische Kontrolleinheit (4) mit dem Massepotenzial (15) verbindet,
**dadurch gekennzeichnet, dass**
eine Mehrzahl von elektrischen Leitungen (8, 12) vorgesehen ist, wobei eine Masseverbindung (14) mittig zu der Mehrzahl von elektrischen Leitungen (8, 12) positioniert ist.

2. Vorrichtung (1) nach Anspruch 1, wobei der mindestens eine elektrische Verbraucher (10) mindestens einen Elektromotor (16) umfasst, wobei weiter der mindestens eine Elektromotor (16) bevorzugt ein Gehäuse (9) und mindestens zwei elektrische Anschlüsse (17, 18) hat, bei dem jeweils eine elektrische Leitung (8, 12) mit einem elektrischen Anschluss (17, 18) und die, insbesondere eine, Masseverbindung (14) mit dem Gehäuse (9) verbunden ist.

3. Vorrichtung (1) nach einem der vorherigen Ansprüche, wobei die mindestens eine elektrische Leitung (8, 12) und die mindestens eine Masseverbindung (14) einen Verbindungsweg (19) bestimmen und zum überwiegenden Anteil des Verbindungsweges (19) aneinander anliegen, wobei der überwiegende Anteil bevorzugt wenigstens 70 % oder sogar wenigstens 90% des Verbindungswegs (19) beträgt.

4. Vorrichtung (1) nach einem der vorherigen Ansprüche, wobei die mindestens eine elektrische Leitung (8, 12) mit der mindestens einen Masseverbindung (14) nicht verschlungen ist.

5. Vorrichtung (1) nach Anspruch 1, wobei zwei elektrische Leitungen (8, 12) in einer Ebene (21) angeordnet sind und eine einzelne Masseverbindung (14) dazwischen positioniert ist.

6. Verwendung der Vorrichtung (1) nach einem der vorherigen Ansprüche zum Bewegen einer Klappe (11) an einem Kraftfahrzeug (2).

7. Kraftfahrzeug (2) mit der Vorrichtung (1) nach einem der Ansprüche 1 bis 5, wobei der wenigstens eine elektrische Verbraucher (10) an einem, insbesondere elektrisch isoliert beschichteten, Karosseriebauteil (20) des Kraftfahrzeugs (2) befestigt ist.

8. Kraftfahrzeug (2) nach Anspruch 7, wobei ein elektrischer Verbraucher (10) einen Elektromotor (16) zum Betätigen einer Klappe (11) des Kraftfahrzeuges (2) aufweist.

## Claims

1. Device (1) for operating at least one electrical consumer (10) of a motor vehicle (2) comprising at least
- one electrical control unit (4) which is connectable to an earth potential,
- at least one electrical consumer (10),
- at least one electrical lead (8, 12) which connects the at least one consumer (10) to the electronic control unit,
- at least one earth connection (14) which connects the at least one electrical consumer (10) via the electronic control unit (4) to the earth potential (15),
**characterised in that**
a plurality of electrical leads (8, 12) is provided wherein one earth connection (14) is positioned centrally with regard to the plurality of electrical leads (8, 12).

2. Device (1) according to claim 1 wherein the at least one electrical consumer (10) comprises at least one electric motor (16) wherein additionally the at least one electric motor (16) preferably has a housing (9) and at least two electrical connections (17, 18), wherein respectively one electrical lead (8, 12) is connected with an electrical connection (17, 18) and the, more particularly one, earth connection (14) is connected to the housing (9).

3. Device (1) according to any one of the preceding claims, wherein the at least one electrical lead (8, 12) and the at least one earth connection (14) determine a connection path (19) and over the greater part of the connection path (19) adjoin each other, wherein the greater part consists of preferably at least 70% or even at least 90% of the connection path (19).

4. Device (1) according to any one of the preceding claims wherein the at least one electrical lead (8, 12) is not intertwined with the at least one earth connection (14).

5. Device (1) according to claim 1 wherein two electrical leads (8, 12) are arranged in one plane (21) and the single earth connection (14) is positioned between them.

6. Use of the device (1) according to any one of the preceding claims for moving a tailgate (11) on a motor vehicle (2).

7. Motor vehicle (2) with a device (1) according to any one of claims 1 to 5 wherein the at least one electrical consumer (10) is fastened to a, in particular electrical insulation-coated, bodywork component (20) of the motor vehicle (2).

8. Motor vehicle (2) according to claim 7 wherein an electrical consumer (10) comprises an electrical motor (16) for operating a tailgate (11) of the motor vehicle (2).

## Revendications

1. Dispositif (1) pour le fonctionnement d'au moins un appareil consommateur électrique (10) d'un véhicule automobile (2) comprenant au moins :
- une unité de contrôle électronique (4), qui peut être reliée avec un potentiel de mase,
- au moins un appareil consommateur électrique (10),
- au moins une ligne électrique (8,12), qui relie au moins un appareil consommateur (10) avec l'unité de contrôle électronique,
- au moins une liaison de masse (14), qui relie au moins un appareil consommateur électrique (10) par l'intermédiaire de l'unité de contrôle électronique (4) avec le potentiel de masse (15),
**caractérisé en ce que**
une pluralité de lignes électriques (8,12) est prévue, dans lequel une liaison de masse (14) est positionnée au centre par rapport à la pluralité de lignes électriques (8,12).

2. Dispositif (1) selon la revendication 1, dans lequel au moins un appareil consommateur électrique (10) comprend au moins un moteur électrique (16), dans lequel en outre le au moins un moteur électrique (16) possède de préférence un carter (9) et au moins deux raccords électriques (17,18), dans lequel respectivement une ligne électrique (8,12) est reliée avec un raccord électrique (17,18) et la, notamment une, liaison de masse (14) est relié avec le carter (9).

3. Dispositif (1) selon une des revendications précédentes, dans lequel au moins une ligne électrique (8,12) et au moins une liaison de masse (14) déterminent un trajet de liaison (19) et viennent reposer l'une sur l'autre par rapport à la partie prépondérante du trajet de liaison (19), dans lequel la partie prépondérante s'élève de préférence à au moins 70% ou même à au moins 90% du trajet de liaison (19).

4. Dispositif (1) selon une des revendications précédentes, dans lequel au moins une ligne électrique (8,12) n'est pas englobée avec au moins une liaison de masse (14).

5. Dispositif (1) selon la revendication 1, dans lequel deux lignes électriques (8,12) sont disposées dans un plan (21) et une liaison de masse individuelles (14) est positionnée entre celles-ci.

6. Utilisation du dispositif (1) selon une des revendications précédentes pour déplacer un clapet (11) sur un véhicule automobile (2).

7. Véhicule automobile (2) comportant le dispositif (1) selon une des revendications 1 à 5, dans lequel au moins un appareil consommateur électrique (10) est fixé sur un composant de carrosserie (20) du véhicule automobile (2), notamment revêtu de manière isolée électriquement.

8. Véhicule automobile (2) selon la revendication 7, dans lequel un appareil consommateur électrique (10) présente un moteur électrique (16) pour actionner un clapet (11) du véhicule automobile (2).
